(19) Europäisches Patentamt
European Patent Office
Office européen des brevets

(11) EP 4 331 713 A1

(12) EUROPEAN PATENT APPLICATION

(43) Date of publication:
**06.03.2024 Bulletin 2024/10**

(21) Application number: **22193580.2**

(22) Date of filing: **02.09.2022**

(51) International Patent Classification (IPC):
***B01D 67/00*** *(2006.01)* ***B01D 71/44*** *(2006.01)*
***B01D 71/52*** *(2006.01)* ***B01D 71/68*** *(2006.01)*
***B01D 71/82*** *(2006.01)*

(52) Cooperative Patent Classification (CPC):
**B01D 71/82; B01D 67/00091; B01D 71/44; B01D 71/5221; B01D 71/5222; B01D 71/5223; B01D 71/68; H01M 8/04149**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MANN+HUMMEL LIFE SCIENCES & ENVIRONMENT HOLDING SINGAPORE PTE. LTD.
Singapore 139234 (SG)**

(72) Inventors:
- **BENDER, Dr. Johannes
71149 Bondorf (DE)**
- **SCHÜTZ, Dr. Steffen
74321 Bietigheim-Bissingen (DE)**
- **ATANASOV, Dr. Vladimir
71083 Herrenberg (DE)**

(74) Representative: **Mann + Hummel Intellectual Property
Mann + Hummel
International GmbH & Co. KG
Schwieberdinger Straße 126
71636 Ludwigsburg (DE)**

# (54) ACID-BASE POLYMER BLEND MEMBRANES FOR SELECTIVE SEPARATION OF GAS

(57) The present disclosure relates to an acid-base polymer blend membrane for selective transport of water molecules from a gaseous mixture comprising at least one first polymer (A) exhibiting acidic groups, and at least one second polymer, wherein the at least one second polymer is a polymer (B1) exhibiting basic groups or a polymer (B2) exhibiting weak basic groups; and wherein polymer (A) is comprised in an amount of from about 60 wt.-% to about 98 wt.-%, based on the total weight of the polymer blend membrane, and wherein the fluorine content of the acid-base polymer blend membrane is below 20 wt.-%.

EP 4 331 713 A1

## Description

Field of the disclosure

The present application relates to an acid-base polymer blend membrane for selective separation of a gaseous mixture, a separation filter comprising the acid-base polymer blend membrane, the use thereof, and a device comprising the separation filter.

BACKGROUND

Separation filters that allow for selective transport of water molecules from a gaseous mixture may be used in moisture separation devices, enthalpy exchange devices, such as heat exchangers, devices with condensers, such as air conditioners, and especially useful in humidifiers.

Humidifiers may be used to maintain certain humidity levels to prevent static electricity buildup, preserve material properties, and ensure a comfortable and healthy environment for workers or residents. For example, in low humidity conditions, typically below 55 % and especially below 45 % relative humidity (RH), friction can cause static buildup and sparks. Similarly, the RH in data centers is recommended to be in a range of 45-55 % to prevent sparks that can damage IT equipment. Therefore, humidifiers are typically applied in industries such as packaging, printing, paper, plastics, textiles, electronics, automotive or semiconductor manufacturing and pharmaceuticals. Furthermore, humidifiers are useful in housing to create a pleasant indoor climate. As such, a RH of 30 % to 50 % is recommended in most homes.

In a more specific application, humidifiers may be connected to fuel cell stacks. In connection with a fuel cell, humidifiers may be required to prevent any membrane of the fuel cell stack from drying out so that conductivity, in particular for protons, is maintained. Once the proton transport rate may be kept on a high level, the power output of the fuel cell may remain on a high level and consequently the fuel cell performance may be maintained on a high level. In a fuel cell, the cathode side of the fuel cell is constantly supplied with oxygen through a continuous stream of gas, in particular air, the so-called intake gas stream. The oxygen is then reduced at the cathode side to form water that is then taken out of the fuel cell stack by the exhaust gas stream in form of water vapor with the oxygen-reduced gas flow. Problems may start to arise when the intake gas has low humidity. As a consequence, the power of the fuel cells drops due to loss in the voltage in the fuel cell and a loss in electrical current, which may occur when the membranes of the fuel cell stack dry out. To counteract this, the humidifier may provide a desired level of humidity to the fuel cell by transferring water vapor from the exhaust gas stream to the intake gas stream.

In order to separate the water vapor from the other gases in the exhaust gas stream of the fuel cell, the humidifier may be equipped with a separation filter exhibiting high gaseous selectivity for gaseous water. On the other hand, the separation filter should be tight for other gases from the intake and exhaust gas streams, in particular for nitrogen and oxygen, since the separation filter concept is based on a low pressure loss at the cathode side of the fuel cell. Typically, the water vapor transport through the membrane in the humidifier needs to be realized against a macroscopic pressure difference of up to about 1 bar (0.1 MPa), especially with a macroscopic pressure difference of about 0.5 bar (0.05 MPa), as the pressure in the inlet stream of the fuel cell is higher compared to the exhaust gas stream at the cathode side of the fuel cell. As such, the fuel cell may operate at a pressure for the inlet stream of the cathode side of about 1.5 bar (0.15 MPa), whereas the pressure of the exhaust gas stream of the cathode side may be around 1 bar (0.1 MPa). Furthermore, the fuel cells usually operate at elevated temperatures, and, therefore, the separation filter preferably shows good performance at elevated temperatures, such as above 50 °C, in particular between 60 °C and 90 °C. The elevated temperature is also advantageous to reduce condensation of water vapor in the device.

Many currently widely used membranes comprise halogenated, in particular fluorinated polymers, e.g. perfluorosulfonic acids (PFSAs). Halogenated polymers have many advantages due to their hydrophobic surface, such as high chemical resistance, in particular when used in combination with strong acids or bases. Furthermore, especially fluorinated polymers are known to exhibit a high water permeation rate when used in membranes. It was shown by Itoh et al. (SCIENCE 2022: Vol 376, Issue 6594, pp. 738-743) that fluorinated groups enhance the water transport through hydrophilic channels by creating hydrophobic phases that break up water clusters with bigger diameters into single water molecules that permeate through nanochannels more easily. The underlying mechanism was explained by intermolecular interactions (H-bridging bonds) of water clusters with polarized C-F-bonds of the fluorinated polymer (Itoh et al., I.c.). It was held that this unique property of fluorinated polymers makes them perfect candidates for use in separation filters. However, PFSAs have two major disadvantages: (i) cost aspect due to the synthesis of PFSA, and (ii) the fluorination during the production of PFSA polymer leads to environment pollution. Furthermore, PFSAs are hardly biodegradable and constitute a further environmental disadvantage.

Thus, there is still a need for fluorine-free or fluorine-reduced polymer membranes, in particular for humidifiers, which membranes are cost-effective and environmentally friendly, especially for applications that involve transport of gaseous water.

**SUMMARY**

It is one object of the present disclosure to provide a membrane for selective transport of gaseous water molecules from a gaseous mixture through the membrane. A specific object of the disclosure is to provide a membrane exhibiting high water vapor transmission, in particular at elevated temperatures, especially in the range of from about 60 °C to about 90 °C.

It is another object of the present disclosure to provide a fluorine-free or fluorine-reduced membrane for selective transport of gaseous water molecules from a gaseous mixture through the membrane to lower the costs of such process by simplifying the production of fluorine-free or fluorine-reduced polymers used to manufacture such membranes, and thereby reducing the environmental pollution and in addition reducing environmental pollution through poorly biodegradable fluorinated polymers.

A further object of the present disclosure is to provide a membrane for selective transport of water molecules from a gaseous mixture through the membrane, which membrane exhibits strong mechanical stability, in particular wherein the membrane is not strongly swelling, as strong swelling may lead to deformation and/or delamination from the humidifier device. Despite, swelling occurring to a small extent may be required to open the hydrophilic polymer channels. Furthermore, the membranes are preferably not brittle, and/or not adhesive.

Another object of the present disclosure is to provide a blend membrane for selective transport of water molecules from a gaseous mixture through the membrane, wherein the membrane has the desired properties for the different applications, in particular for a humidifier for a fuel cell.

A specific object of the disclosure is to provide a membrane that is tight for or impermeable to an oxygen-containing gaseous mixture, in particular tight for air, but may be able to transport water vapor selectively through the membrane.

Another specific object of the disclosure is to provide a membrane that is able to get assembled to a humidifier stack by either gluing or welding or pressing using adequate sealing to ensure the required gas-tightness.

In a first aspect, the present disclosure provides an acid-base polymer blend membrane for selective transport of water molecules from a gaseous mixture comprising at least one first polymer (A) exhibiting acidic groups, and at least one second polymer, wherein the at least one second polymer is a polymer (B1) exhibiting basic groups or a polymer (B2) exhibiting weak basic groups; and wherein polymer (A) is comprised in an amount of from about 60 wt.-% to about 98 wt.-%, based on the total weight of the polymer blend membrane, and wherein the fluorine content of the acid-base polymer blend membrane is below 20 wt.-%.

In a second aspect, the present disclosure provides a separation filter comprising a support structure and a membrane according to the first aspect, wherein the acid-base polymer blend membrane is laminated with a support structure.

In a third aspect, the present disclosure provides a use of the acid-base polymer blend membrane according to the first aspect, or separation filter according to the second aspect, in a humidifier, a moisture separation device, an enthalpy exchange device, a device with a condenser, preferably a humidifier for a fuel cell, a heat exchanger or an air conditioner.

In a fourth aspect, the present disclosure provides a device comprising the acid-base polymer blend membrane according to the first aspect, or separation filter according to the second aspect, wherein the device is a humidifier, a moisture separation device, an enthalpy exchange device, or a device with a condenser, preferably a humidifier for a fuel cell, a heat exchanger or an air conditioner.

The present invention will be described with respect to particular embodiments and with reference to certain examples, but the invention is not limited thereto, and it is only defined by the appending claims.

BRIEF DESCRIPTION OF FIGURES

- Fig. 1 Schematic drawing of a humidifier for a fuel cell.

DETAILED DESCRIPTION

In a first aspect, the present disclosure provides an acid-base polymer blend membrane for selective transport of water molecules from a gaseous mixture comprising at least one first polymer (A) exhibiting acidic groups, and at least one second polymer, wherein the at least one second polymer is a polymer (B1) exhibiting basic groups or a polymer (B2) exhibiting weak basic groups; and wherein polymer (A) is comprised in an amount of from about 60 wt.-% to about 98 wt.-%, based on the total weight of the polymer blend membrane, and wherein the fluorine content of the acid-base polymer blend membrane is below 20 wt.-%.

The inventors of the present disclosure have surprisingly found that acid-base polymer blend membranes can be used for selective transport of water molecules from a gaseous mixture through said acid-base polymer blend membranes. Two gas streams may be separated by said acid-base polymer blend membranes, wherein the water content of the stream with the higher water content (water-rich stream) may be depleted of water, whereas the water content of the stream with the lower water content (water-poor stream) may be increased. Even more surprisingly, it was found that the acid-base polymer blend membranes having a fluorine content of below 20 wt.-% can be used for selective transport of water molecules from a gaseous mixture through such membranes. The acid-base polymer blend membranes of the present disclosure show good permeability for water vapor, while being tight for air, i.e., in particular nitrogen and oxygen.

It is further assumed that an acid-base polymer blend membrane comprising a polymer (A) exhibiting acidic groups and a polymer (B2) exhibiting weak basic groups may form larger channels for water in the membrane compared to an acid-base polymer blend membrane comprising a polymer (A) exhibiting acidic groups and a polymer (B1) exhibiting basic groups due to weaker interactions between the acidic groups and weak basic groups compared to the interactions between the acidic groups and basic groups. As such, the properties of a membrane comprising a polymer (B2) exhibiting weak basic groups may be advantageous for the transport of water molecules through the membranes.

In the following, preferred embodiments on the first aspect are disclosed.

In a preferred embodiment of the first aspect, the acid-base polymer blend membrane comprises at least two second polymers, wherein the at least two second polymers comprise a polymer (B1) exhibiting basic groups, and a polymer (B2) exhibiting weak basic groups.

Surprisingly, it was found that also the combination of a polymer (B1) exhibiting basic groups, and a polymer (B2) exhibiting weak basic groups can be used in accordance with the present disclosure for the preparation of membranes having good water permeability.

It is further assumed that the combination of a polymer (B1) exhibiting basic groups with a polymer (B2) exhibiting weak basic groups may be advantageous for the use in a membrane for selective transport of water molecules as said combination of groups may allow the formation of reversible ionic interactions between the acidic groups, basic groups and weak basic groups, which interactions may be reversible and may allow to reorient the channels from smaller to larger channels as the reorientation needs less energy due to weaker interactions of the weak basic groups.

In another preferred embodiment of the first aspect, the acid-base polymer blend membrane comprises at least one third polymer, wherein the at least one third polymer is a neutral polymer (N).

It is assumed that the addition of a further third polymer, wherein the third polymer is a neutral polymer (N), may add to the stability of the acid-base polymer blend membrane, its ability to seal the membrane for the transmission of other gas molecules, in particular air including oxygen and nitrogen, and its structural and mechanical properties, including adhesive properties.

In another preferred embodiment of the first aspect, an acid-base polymer blend membrane is provided, wherein the acidic group of the first polymer is selected from the group consisting of $-SO_3H$, $-PO_3H_2$, -COOH, $-ASO_3H_2$, $-SeO_3H$, $-C_6H_4OH$, -OH, and -SH, preferably wherein the acidic group is $-SO_3H$.

In another preferred embodiment of the first aspect, an acid-base polymer blend membrane is provided, wherein the at least one first polymer (A) is selected from the group consisting of sulfonated polyphenylsulfone (sPPSU), sulfonated poly(arylene ether sulfone) (sPAES), sulfonated poly(arylene ether ketone) (sPAEK), sulfonated poly(ether ether ketone) (sPEEK), sulfonated poly (ether ketone) (sPEK), and poly(4-styrenesulfonate) (PSS), preferably wherein the at least one first polymer (A) is selected from the group consisting of sulfonated polyphenylsulfone (sPPSU) and sulfonated poly(ether ether ketone) (sPEEK), and further preferably wherein the at least one first polymer is sulfonated polyphenylsulfone (sPPSU).

In a preferred embodiment of the first aspect, an acid-base polymer blend membrane is provided, wherein the polymer blend membrane comprises a polymer (B1), wherein the basic group is selected from the group consisting of aliphatic amines, heterocyclic amines, imines, and NH-substituted heteroaromatic amines, preferably wherein the basic group is selected from the group consisting of $C_1$-$C_6$-alkyl amines, piperidine, pyrrolidine, triazole, benzotriazole, pyrazole, benzpyrazole, imidazole, benzimidazole and partially fluorinated benzimidazole, further preferably wherein the basic group is selected from the group consisting of imidazole, benzimidazole and partially fluorinated benzimidazole, further preferably wherein the basic group is benzimidazole, and/or wherein the polymer blend membrane comprises a polymer (B2), wherein the weak basic group is selected from the group consisting of aryl amines, lactams and $NR_2$-substituted heteroaromatic amines, preferably wherein the weak basic group is selected from the group consisting of pyrrolidone, pyrimidine, pyridine, and aniline, preferably wherein the weak basic group is pyrrolidone or pyridine.

In a preferred embodiment of the first aspect, an acid-base polymer blend membrane is provided, wherein the at least one second polymer comprises a polymer (B1), wherein polymer (B1) is selected from the group consisting of partially fluorinated poly(benzimidazole) (F6-PBI), meta-poly(benzimidazole) (m-PBI), polybenzimidazole-OO (PBI-OO), and co-polymerized polybenzimidazole (PBI-OO), preferably wherein polymer (B1) is selected from the group consisting of partially fluorinated poly(benzimidazole) (F6-PBI), meta-poly(benzimidazole) (m-PBI), and co-polymerized polybenzimidazole (PBI-OO), and/or wherein the at least one second polymer comprises a polymer (B2), wherein polymer (B2) is selected from the group consisting of poly(vinylpyrrolidone) (PVP), pyridylketon-modified polysulfone (py-PSU) and poly(4-vinyl-pyridine) (PVPy), preferably polymer (B2) is selected from poly(vinylpyrrolidone) (PVP) and pyridylketon-modified polysulfone (py-PSU).

In a preferred embodiment of the first aspect, an acid-base polymer blend membrane is provided, wherein the membrane comprises a neutral polymer (N) selected from the group consisting of polyethylene, polyethers, polyesters, polysaccharide, polysaccharide esters, and partially fluorinated polyolefines, preferably selected from the group consisting of poly(ethylene glycol) (PEG), poly(phenylene oxide) (PPO), cellulose, cellulose acetate (CMA), cellulose triacetate (CTA), carboxymethylcellulose (CMC), partially fluorinated polyarylene, and poly(vinylidenfluoride) (PVDF), more preferably wherein polymer (N) is partially fluorinated polyarylene or partially fluorinated poly(vinylidenfluoride) (PVDF), even more preferably wherein polymer (N) is partially fluorinated poly(vinylidenfluoride) (PVDF).

In a preferred embodiment of the first aspect, an acid-base polymer blend membrane is provided, wherein polymer (A) is comprised in the membrane in an amount of from about 80 wt.-% to about 95 wt.-%, more preferably in an amount of from about 85 wt.-% to about 90 wt.-%, based on the total weight of the polymer blend membrane.

In a second aspect, the present disclosure provides a separation filter comprising a support structure and a membrane according to the first aspect, wherein the acid-base polymer blend membrane is laminated with a support structure.

It is assumed that the support structure according to the second aspect allows for the preparation of acid-base polymer blend membranes having a very low thickness, such as 10 $\mu$m or below, that may show a higher water vapor transmission, compared to thicker polymer membranes, which have a thickness of, e.g., 50 $\mu$m. With the ability to prepare thin membranes, this may also add to reduced costs and reduced environmental burden due to reduced amount of polymer material used for the membranes.

In the following, preferred embodiments of the second aspect are disclosed.

In a preferred embodiment of the second aspect, a separation filter is provided, wherein the support structure is a woven or nonwoven fabric, preferably wherein the fabric comprises a polymer selected from the group consisting of polyethylene (PE), polypropylene (PP), polyamide (PA), polysulfone (PSU), poly(ether ether ketone) (PEEK), poly(ether ketone) (PEK), polyvinylidene fluoride (PVDF), polyethersulfone (PES), polyetherimide (PEI), polybenzimidazole (PBI), polyethylene terephthalate (PET), polyester and polyphenylene oxide (PPO); or wherein the fabric comprises glass fibers, further preferably wherein the fabric comprises a polymer selected from the group consisting of polyethylene (PE), polypropylene (PP), polyamide (PA), polysulfone (PSU), poly(ether ether) ketone (PEEK), poly(ether ketone) (PEK), polyethylene terephthalate (PET), and polyester, or wherein the fabric comprises a polymer selected from the group consisting of polyethylene (PE), polypropylene (PP), and polyester.

In a preferred embodiment of the second aspect, a separation filter is provided, wherein the support structure is laminated with the acid-base polymer blend membrane on one side of the support structure, or wherein the entire support structure is laminated with the acid-base polymer blend membrane.

In a third aspect, the present disclosure provides a use of the acid-base polymer blend membrane according to the first aspect, or separation filter according to the fourth aspect, in a humidifier, a moisture separation device, an enthalpy exchange device, a device with a condenser, preferably a humidifier for a fuel cell, a heat exchanger or an air conditioner.

The inventors of the present disclosure have surprisingly found that the acid-base polymer blend membranes show great performance at the operation conditions of a fuel cell, such as elevated temperature. In the use of the membrane in a humidifier for a fuel cell, the humidifier is typically connected to the cathode side of a flow cell. To maintain the oxygen flow to the cathode side of the fuel cell, the membranes must be tight for gases, in particular oxygen and/or nitrogen. The acid-base polymer blend membranes as disclosed herein, show excellent resistance to elevated temperatures, such as from about 60 °C to about 80 °C and in addition mechanical stability against elevated pressure, in particular up to 3 bar (0.3 MPa) and exhibit a minimum air leakage flow through the membrane per area and pressure difference, in particular the membranes are tight for air up to 3 bar (0.3 MPa), wherein the tightness is judged by eye in an air bubble cell.

In a preferred embodiment of the third aspect, a use in a humidifier for a fuel cell is provided, wherein the operation temperature of the fuel cell is in the range of from about 50 °C to about 120 °C, preferably from about 60 °C to about 100 °C, most preferably from about 70 °C to about 90 °C, and/or wherein the gas pressure applied at the one side of the acid-base polymer blend membrane is above 1 bar (0.1 MPa), preferably from about 1 bar (0.1 MPa) to about 3 bar (0.3 MPa), more preferably from about 1 bar (0.1 MPa) to about 2 bar (0.2 MPa), and/or wherein the difference in gas pressure between the two sides of the acid-base polymer blend membrane is from about 0.1 bar (0.01 MPa) to about 1 bar (0.1 MPa), preferably is around 0.5 bar (0.05 MPa).

In a fourth aspect, the present disclosure provides a device comprising the acid-base polymer blend membrane according to the first aspect, or separation filter according to the second aspect, wherein the device is a humidifier, a moisture separation device, an enthalpy exchange device, or a device with a condenser, preferably a humidifier for a

fuel cell, a heat exchanger or an air conditioner.

Definitions

Terms as set forth hereinafter are generally to be understood in their common sense unless indicated otherwise.
Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.
Where an indefinite or definite article is used when referring to a singular noun, e.g. "a", "an" or "the", this includes a plural of that noun unless specifically stated otherwise.
Terms like "obtainable" and "obtained" are used interchangeably. This, e.g., means that, unless the context clearly dictates otherwise, the term "obtained" does not mean to indicate that e.g. an embodiment must be obtained by e.g. the sequence of steps following the term "obtained" even though such a limited understanding is always included by the terms "obtained" as a preferred embodiment.
The membranes of the present disclosure are mainly or exclusively composed of polymers. These polymers may exhibit acidic or basic functionality.
As used herein, an "acidic polymer" refers to a polymer with at least one acidic group per repeating unit. In a preferred embodiment, said acidic group A is a sulfonate group ($-SO_3H$).
As used herein, a "basic polymer" refers to a polymer with at least one basic group per repeating unit.
As used herein, a "weak basic polymer" refers to a polymer with at least one weak basic group per repeating unit.
As used herein, "basic group" refers to a nitrogen containing group exhibiting NH-basicity, wherein the nitrogen containing group is selected from the group consisting of aliphatic amines, heterocyclic amines, imines, and NH-substituted heteroaromatic amines, each of them as further defined below.
As used herein, "weak basic group" refers to a nitrogen containing group exhibiting NH-basicity, wherein the nitrogen containing group is selected from the group consisting of aryl amines, lactams and $NR_2$-substituted heteroaromatic amines, each of them as further defined below.
As used herein, "NH-basicity" refers to the ability of a nitrogen containing group to form hydroxide anions in an aqueous solution.
As used herein, "aliphatic amines" refers to functional groups derived from ammonia and substituted with saturated or unsaturated aliphatic carbon chains, wherein the amine groups may be primary ($-NH_2$), secondary (-NHR) or tertiary ($-NR_2$) amine groups.
As used herein, "heterocyclic amines" refers to functional groups comprising a nitrogen atom in a carbocyclic ring structure.
As used herein, "imines" refers to functional groups comprising a carbon-nitrogen double bond, wherein the carbon atom has two additional single bonds and wherein the nitrogen atom may be attached to a hydrogen or an organic group.
As used herein, "NH-substituted heteroaromatic amines" refers to functional groups comprising a nitrogen atom in an aromatic structure following the Hückel (4n+2)-rule, and have a neutral resonance structure in which the nitrogen atom is substituted with a hydrogen atom.
As used herein, "$NR_2$-substituted heteroaromatic amines" refers to functional groups comprising a nitrogen atom in an aromatic structure following the Hückel (4n+2)-rule, and have a neutral resonance structure in which the nitrogen atom is substituted with a double bond and a single bond to the neighboring atoms of the aromatic ring.
As used herein, "aryl amines" refers to functional groups derived from ammonia and substituted with an aryl group, e.g. substituted or unsubstituted phenyl group.
As used herein, "lactams" refers to functional groups, which are cyclic amides.
As used herein, "fluorine content" reflects the amount of fluorine by mass in a repetitive unit of a polymer in relation to the total mass of the repetitive unit. The fluorine content may be calculated according to the following equation:

$$Content\ F\ (\%) = 100 * \frac{\sum molar\ mass\ of\ all\ fluorine\ atoms}{\sum molar\ mass\ all\ atoms\ in\ repetitive\ unit}$$

As used herein, "partially fluorinated polymer" or "fluorine-reduced polymer" refers to a polymer with multiple carbon-fluorine bonds in one repetitive unit of a polymer, whereas carbon-hydrogen bonds remain, as such 50% or less of the carbon atoms may be bound to fluorine instead of hydrogen.
If a polymer exhibits acidic functionality, said functionality may be, e.g., provided by a chemical group selected from the group consisting of $-SO_3H$ (sulfonate group), $-PO_3H_2$ (phosphonate group), -COOH (carboxyl group), $-ASO_3H_2$

(arsonate group), $-SeO_3H$ (selenoic group), $-C_6H_4OH$ (phenol group), -OH (hydroxyl) and -SH (thiol). Any of these groups provide acidic functionality.

If a polymer exhibits basic functionality, said functionality may be, e.g., provided by a nitrogen containing group, such as a nitrogen in a group selected from the group consisting of aliphatic amines, heterocyclic amines, imines, and NH-substituted heteroaromatic amines.

If a polymer exhibits weak basic functionality, said functionality may be, e.g., provided by a nitrogen containing group, such as a nitrogen in a group selected from the group consisting of aryl amines, lactams and $NR_2$-substituted heteroaromatic amines.

If a polymer exhibits neutral functionality, said functionality may be, e.g. polyethylene, polyethers, polyesters, polysaccharide, polysaccharide esters, and partially fluorinated aliphatic hydrocarbon chains.

## Polymers

The present disclosure relates to an acid-base polymer blend membrane. The membrane is thus composed of a blend of at least two different polymers, namely at least one first polymer (A) exhibiting acidic groups, and at least one second polymer, wherein the at least one second polymer is a polymer (B1) exhibiting basic groups or a polymer (B2) exhibiting weak basic groups. Optionally, the acid-base polymer blend membrane additionally comprises at least two second polymers, wherein the at least two second polymers comprise a polymer (B1) exhibiting basic groups, and a polymer (B2) exhibiting weak basic groups. Further optionally, the acid-base polymer blend membrane additionally comprises at least one third polymer, wherein the at least one third polymer is a neutral polymer (N).

The core of the membrane is a blend of the at least two polymers with different functionality, one providing acidic, the other providing basic or weak basic functionality. In one preferred embodiment, the polymer is a blend with a third polymer providing neutral functionality. With this core in mind, it is understood that for each functionality, also more than one polymer may be used, i.e., a mixture of at least two polymers both providing acidic functionality, and / or a mixture of at least two polymers both providing basic functionality, and / or a mixture of at least two polymers both providing weak basic functionality, and / or a mixture of at least two polymers both providing neutral functionality.

Such mixtures may allow for a further tailoring of the acidic, basic and/or weak basic, and optionally neutral properties of the polymer blend.

In a preferred embodiment, mixtures are used for tailoring of the acidic and basic properties of the polymer blend.

In a preferred embodiment, mixtures are used for tailoring of the acidic and weak basic properties of the polymer blend.

In a preferred embodiment, mixtures are used for tailoring of the acidic, basic and weak basic properties of the polymer blend.

### *Polymers exhibiting acidic groups*

The first polymer used in the polymer blend is a polymer (A) exhibiting acidic groups. Such polymer is also referred to herein as "acidic polymer".

In a preferred embodiment, the acidic group of the first polymer is selected from the group consisting of $-SO_3H$, $-PO_3H_2$, -COOH, $-ASO_3H_2$, $-SeO_3H$, $-C_6H_4OH$, -OH, and -SH.

In a further preferred embodiment, the acidic group is $-SO_3H$.

However, it is understood that also more than one of the different acidic groups may be present in a single polymer. This allows for a more differentiated adjustment of the acidic function of the polymer according to the needs.

In a preferred embodiment, the polymer exhibiting an acidic group makes use of only one acidic group, not exhibiting different acidic groups, in particular from the groups as listed above. Thus, in addition to a mixture of different polymers each exhibiting a different acidic group, different acidic groups may also be provided within a single polymer.

Thus, in one embodiment, the at least one first polymer exhibiting acidic groups is a polymer exhibiting at least one sulfonate group ($-SO_3H$), at least one phosphonate group ($-PO_3H_2$), at least one carboxyl group (-COOH), at least one arsonate group ($-ASO_3H_2$), at least one selenoic group ($-SeO_3H$), at least one phenol group ($-C_6H_4OH$), at least one hydroxyl group (-OH) and/or at least one thiol group (-SH) per repeating unit.

The acidic polymer may be prepared from a polymer not exhibiting acidic groups by introducing said acidic groups. Acidic groups may be introduced by known measures. For instance, a sulfonate group may be introduced into a polymer by sulfonation, e.g., using concentrated sulfuric acid or oleum. Alternatively, the polymer may be prepared using monomers exhibiting the desired acidic group.

In a preferred embodiment, the backbone polymer, i.e., the polymer not exhibiting an acidic group, may be selected from poly(arylene ether sulfone) (PAES), poly(arylene ether ketone) (PAEK), poly(ether ether ketone) (PEEK), poly (ether ketone) (PEK), and poly(4-styrenesulfonate) (PSS). A preferred embodiment of PAES is polyphenylsulfone (PPSU).

A particularly preferred acidic group is the sulfonate group (-$SO_3H$). As already outlined above, the sulfonated polymer may be prepared by direct sulfonation of a backbone polymer, or by (co-)polymerization using monomers having at least one sulfonate group.

Thus, a preferred embodiment of the present disclosure relates to the use of sulfonated polyphenylsulfone (sPPSU), sulfonated poly(arylene ether sulfone) (sPAES), sulfonated poly(arylene ether ketone) (sPAEK), sulfonated poly(ether ether ketone) (sPEEK), sulfonated poly (ether ketone) (sPEK), and poly(4-styrenesulfonate) (PSS) as the at least one first polymer.

In a further preferred embodiment, the at least one first polymer is selected from the group consisting of sulfonated polyphenylsulfone (sPPSU) and sulfonated poly(ether ether ketone) (sPEEK), with the sulfonated polyphenylsulfone (sPPSU) being further preferred.

In a preferred embodiment, sulfonated poly(arylene ether sulfone) (sPAES) is sulfonated polyphenylsulfone (sPPSU) having the following structural representation:

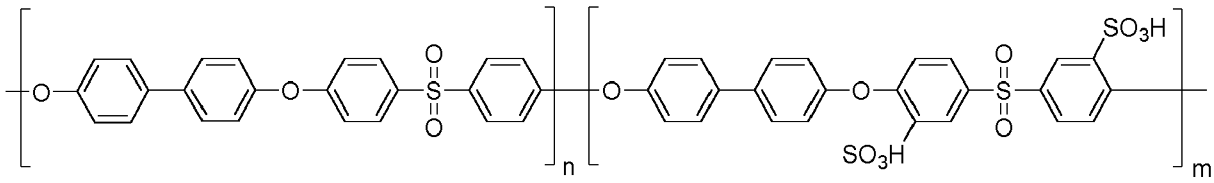

sPPSU

The polymer sPPSU may be obtained by copolymerization of a monomer bearing two sulfonate groups, a monomer bearing no sulfonate group, and a monomer being an arylene linker, the arylene linker is preferably selected as biphenyl-4,4'-diol. The monomers may be present in the amount of n, m, and n+m, i.e., the ratio of the un-sulfonated monomer (in the amount of n) to the double-sulfonated monomer (in the amount of m) arylene linker (in the amount of n+m) is n : m : n+m.

In another preferred embodiment, the at least one first polymer exhibiting acidic groups is sPEEK.

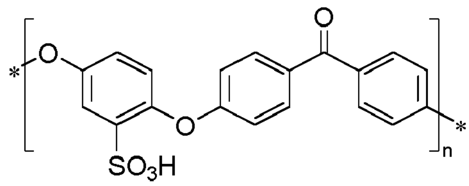

sPEEK

sPEEK may be obtained by the direct sulfonation of PEEK.

In another preferred embodiment, the at least one first polymer exhibiting acidic groups is sPAEK, further preferably is sPEK.

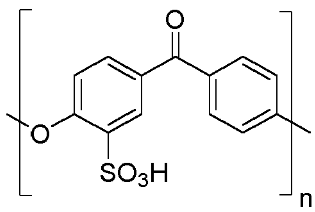

sPEK

sPEK may be obtained by the direct sulfonation of PEK.

In another preferred embodiment, the at least one first polymer exhibiting acidic groups is SFS.

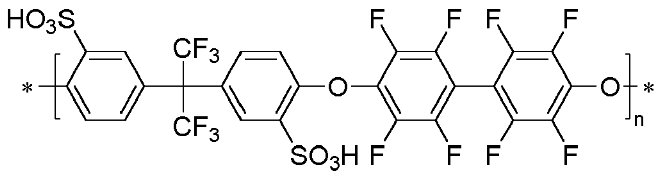

SFS

SFS may be obtained by the direct sulfonation of PFS published in Literature (F. Schönberger, A. Chromik, J. Kerres, Polymer2010, 51, 4299-4313).

In one embodiment, the acid-base polymer blend membrane comprises a polymer (A) in an amount of from about 80 wt.-% to about 95 wt.-%, based on the total weight of the polymer blend membrane.

In a preferred embodiment, the acid-base polymer blend membrane comprises a polymer (A) in an amount of from about 85 wt.-% to about 90 wt.-%, based on the total weight of the polymer blend membrane.

*Polymers exhibiting basic groups*

The at least one second polymer used in the polymer blend may be a polymer (B1) exhibiting basic groups. Such polymer is also referred to herein as "basic polymer".

In a preferred embodiment, wherein the at least one second polymer comprises a polymer (B1), wherein the basic group of the second polymer is selected from the group consisting of aliphatic amines, heterocyclic amines, imines, and NH-substituted heteroaromatic amines. In a more preferred embodiment, the basic group of the second polymer is selected from the group consisting of $C_1$-$C_6$-alkyl amines, piperidine, pyrrolidine, triazole, benzotriazole, pyrazole, benzpyrazole, imidazole, benzimidazole and partially fluorinated benzimidazole. Said group may be part of the polymer backbone, or present as a substituent to the polymer backbone.

In a preferred embodiment, the basic group is part of the polymer backbone.

In another preferred embodiment, the basic group is selected from the group consisting of imidazole, benzimidazole, and partially fluorinated benzimidazole, further preferably benzimidazole.

In still another preferred embodiment, only a single basic group is present in the basic polymer. However, it is understood that also more than one of the different basic groups may be present in a single polymer.

In another embodiment, the at least one second polymer comprises a polymer (B1), wherein the polymer (B1) is selected from the group consisting of partially fluorinated poly(benzimidazole) (F6-PBI), meta-poly(benzimidazole) (m-PBI), and polybenzimidazole-OO (PBI-OO), co-polymerized polybenzimidazole (PBI-OO), with poly(vinylpyrrolidone) (PVP) and pyridylketon-modified polysulfone (py-PSU) being further preferred.

m-PBI exhibits one repeating unit, wherein each repeating unit bears two basic benzimidazole groups:

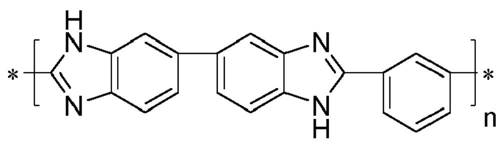

mPBI

In another embodiment, the at least one second polymer exhibiting basic groups is PBI-OO. PBI-OO exhibits one repeating unit, wherein

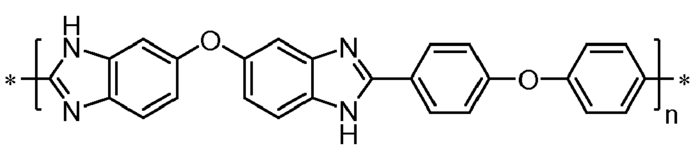

PBI-OO

In another embodiment, the at least one second polymer exhibiting basic groups is F6-PBI. F6-PBI exhibits one repeating unit, wherein

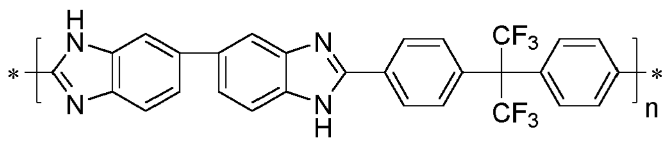

F6-PBI

In a preferred embodiment, the acid-base polymer blend membrane comprises a polymer (B1) in an amount of from about 2 wt.-% to about 20 wt.-%, preferably 5 wt.-% to about 15 wt.-%, based on the total weight of the polymer blend membrane.

*Polymers exhibiting weak basic groups*

The at least one second polymer used in the polymer blend may be a polymer (B2) exhibiting weak basic groups. Such polymer is also referred to herein as "weak basic polymer".
The use of the weak basic polymer is in addition to, or alternative to the basic polymer described above.
In a preferred embodiment, wherein the at least one second polymer comprises a polymer (B2), the weak basic group of the second polymer is selected from the group consisting of aryl amines, lactams and $NR_2$-substituted heteroaromatic amines. Said group may be part of the polymer backbone, or present as a substituent to the polymer backbone.
In a preferred embodiment, the weak basic group is part of the polymer side chain.
In another preferred embodiment, the weak basic group is selected from the group consisting of pyrrolidone, pyrimidine, pyridine, and aniline, further preferably pyrrolidone or pyridine.
In still another preferred embodiment, only a single weak basic group is present in the second polymer. However, it is understood that also more than one of the different weak basic groups may be present in a single polymer.
In another embodiment, the at least one second polymer comprises a polymer (B2), wherein polymer (B2) is poly(vinylpyrrolidone) (PVP), pyridylketon-modified polysulfone (py-PSU) and poly(4-vinyl-pyridin) (PVPy), with poly(vinylpyrrolidone) (PVP) and pyridylketon-modified polysulfone (py-PSU) being further preferred.
In another embodiment, the at least one second polymer exhibiting weak basic groups is PVP. PVP exhibits one repeating unit, wherein

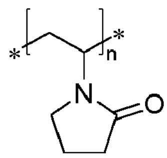

PVP

In another embodiment, the at least one second polymer exhibiting weak basic groups is py-PSU. py-PSU exhibits one repeating unit, wherein

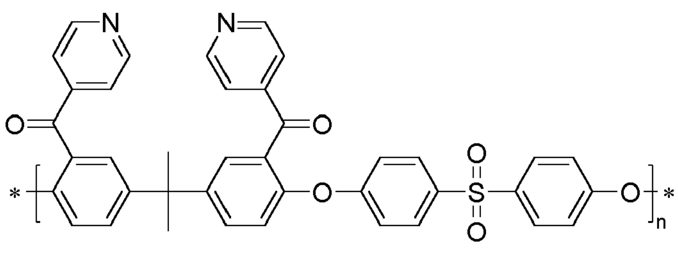

py-PSU

py-PSU may be obtained by substitution reaction of PSU published in Literature (Journal of Polymer Science: Part A: Polymer Chemistry, Vol. 39, 2874-2888 (2001)).

In a preferred embodiment, the acid-base polymer blend membrane comprises a polymer (B2) in an amount of from about 2 wt.-% to about 20 wt.-%, preferably 5 wt.-% to about 15 wt.-%, based on the total weight of the polymer blend membrane.

*Neutral Polymers*

Optionally, a third polymer may be used in the polymer blend membranes according to the present disclosure. The third polymer used in the polymer blend may be a neutral polymer (N).

In a preferred embodiment, wherein the at least one third polymer comprises a neutral polymer (N) selected from the group consisting of polyethylene, polyethers, polyesters, polysaccharide, polysaccharide esters, and partially fluorinated aliphatic hydrocarbon chains. Said neutral polymers may comprise a neutral polymer backbone, and in addition comprise neutral substituents to the polymer backbone.

In another preferred embodiment, the at least one third neutral polymer (N) selected from the group consisting of poly(ethylene glycol) (PEG), poly(phenylene oxide) (PPO), cellulose, cellulose acetate (CMA), cellulose triacetate (CTA), carboxymethylcellulose (CMC), partially fluorinated polyarylene, and poly(vinylidenfluoride) (PVDF), with fluorinated polyarylene or partially fluorinated poly(vinylidenfluoride) (PVDF) being further preferred, and with fluorinated poly(vinylidenfluoride) (PVDF) being even further preferred.

In another embodiment, the at least one third polymer is PVDF. PVDF exhibits one repeating unit, wherein

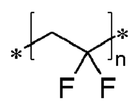

PVDF

In a preferred embodiment, the acid-base polymer blend membrane comprises a polymer (N) in an amount of from about 2 wt.-% to about 20 wt.-%, preferably 5 wt.-% to about 15 wt.-%, based on the total weight of the polymer blend membrane.

*Fluorine content of polymers*

The acid-base polymers blend membranes may be fluorine-reduced or fluorine-free, wherein fluorine-reduced may be defined as described above. In the first aspect of the disclosure, the acid-base polymer blend membrane is characterized by a low fluorine content, wherein the fluorine content may be defined as outlined above and may be calculated as described above.

The fluorinated or fluorine-reduced polymer may be prepared by known measures. As such, partially fluorinated polymers may be prepared from fluorinated monomers (precursors) by a radical-polymerization reaction or a polycondensation reaction or an ion mediated polymerization reaction. In a partially fluorinated polymer prepared from said methods, the stoichiometry of the monomers in the polymerization reaction forms the basis for the calculation of the fluorine content as described above.

The polymer may be obtained by copolymerization of a monomer bearing fluoride groups and a monomer bearing no fluoride group.

In one embodiment, the fluorine content of the acid-base polymer blend membrane is below 20 wt.-%.

In a preferred embodiment, the fluorine content of the acid-base polymer blend membrane is below 10 wt.-%, a fluorine-free acid-base polymer blend membrane being the most preferred.

In one embodiment, the acid-base polymer blend membrane comprises fluorine-free polymers for polymers selected from the group consisting of polymer (A), polymer (B1), polymer (B2) or polymer (N).

In another embodiment, the acid-base polymer blend membrane comprises at least one fluorine-reduced polymer for any one selected from the group consisting of polymer (A), polymer (B1), polymer (B2) or polymer (N).

In a preferred embodiment, the acid-base polymer blend membrane comprises at least one fluorine-reduced polymer for any one selected from the group consisting of polymer (A), polymer (B1), polymer (B2) or polymer (N), wherein the fluorine-reduced polymer is comprised in the membrane in a low amount of below 25 wt.-%, the fluorine-reduced polymer in an amount of from about 2 wt.-% to about 10 wt.-%, based on the total weight of the acid-base polymer blend membrane being further preferred.

The fluorine content is exemplified for polymers that may be used for polymer (A), polymer (B1), polymer (B2)

and polymer (N) of the present disclosure and preferred polymer blends according to the present disclosure (Examples 1 to 3) in comparison with highly fluorinated polymers in Table 1.

In a preferred embodiment, a fluorine-reduced polymer may be used as either polymer (A), polymer (B1), polymer (B2) or polymer (N), the fluorine-reduced polymer selected from the group consisting of SFS, PVDF, and F6-PBI, preferably selected from PVDF or F6-PBI, even more preferably F6-PBI.

Table 1: Fluorine content of polymers and polymer blends

| Polymer | Abbreviation | Fluorine content |
|---|---|---|
| Perfluorosulfonic acid | PFSA | >60 % |
| Elongated Polytetrafluorethylene | ePTFE | 75 % |
| Acidic Polymers (A) | sPPSU / sPEK / sPEEK / PSS | 0% |
| A | SFS | 19 % |
| Basic Polymers (B1) | m-PBI / PBI-OO | 0% |
| B1 | F6-PBI | 21 % |
| Weak basic Polymers (B2) | PVP, PVPy | 0 % |
| Neutral Polymers (C) | PEG, CMA, CTA | 0 % |
| C | PVDF | 58 % |
| Example 1 (90:10 wt.-%) | sPPSU+F6-PBI | 1.2 % |
| Example 2 (85:10:5 wt.-%) | SFS+py-PSU+F6-PBI | 17 % |
| Example 3 (60:20:20 wt.-%) | sPEEK+PVP+PVDF | 3% |

*Polymer blend*

In the acid-base polymer blend membrane of the present disclosure, at least one first polymer exhibiting acidic groups and at least one second polymer exhibiting basic or weak basic groups are present. As already outlined above, it is understood that more than two polymers, and in particular more than two polymers exhibiting acid and / or basic groups and / or weak basic may be present. In one preferred embodiment, a neutral polymer may be present.

In one embodiment, an acid-base polymer blend membrane according to the present disclosure comprises a polymer bearing a sulfonate group ($-SO_3H$) as acidic group, and a polymer bearing at least one basic group selected from benzimidazole and partially fluorinated benzimidazole.

In another preferred embodiment, an acid-base polymer blend membrane according to the present disclosure comprises an acidic polymer (A) selected from sPPSU or sPEEK, and a basic polymer (B1) selected from the group consisting of F6-PBI, m-PBI and PBI-OO, preferably a basic polymer (B1) selected as F6-PBI.

In a more preferred embodiment, an acid-base polymer blend membrane according to the present disclosure comprises an acidic polymer (A) selected as sPPSU and a basic polymer (B1) selected as F6-PBI.

In another further preferred embodiment, an acid-base polymer blend membrane according to the present disclosure comprises an acidic polymer (A) selected as sPPSU and a basic polymer (B1) selected as F6-PBI, and a neutral polymer (N) selected as PVDF.

In another more preferred embodiment, an acid-base polymer blend membrane according to the present disclosure comprises an acidic polymer (A) selected as sPEEK and a basic polymer (B1) selected as m-PBI.

In another embodiment, an acid-base polymer blend membrane according to the present disclosure comprises a polymer bearing a sulfonate group ($-SO_3H$) as acidic group, and a polymer bearing at least one weak basic group selected from pyrrolidone and pyridine.

In another preferred embodiment, an acid-base polymer blend membrane according to the present disclosure comprises an acidic polymer (A) selected from sPPSU and sPEEK, and a weak basic polymer (B2) selected from PVP and py-PSU.

In a more preferred embodiment, an acid-base polymer blend membrane according to the present disclosure comprises an acidic polymer (A) selected as sPPSU and a weak basic polymer (B2) selected as py-PSU.

In another more preferred embodiment, an acid-base polymer blend membrane according to the present disclosure comprises an acidic polymer (A) selected as sPEEK and a basic polymer (B2) selected as PVP.

In another further preferred embodiment, an acid-base polymer blend membrane according to the present

disclosure comprises an acidic polymer (A) selected as sPEEK, and a weak basic polymer (B2) selected as PVP, and a neutral polymer (N) selected as PVDF.

In another preferred embodiment, an acid-base polymer blend membrane according to the present disclosure comprises the acidic polymer (A) selected from sPPSU and sPEEK, and a weak basic polymer (B2) selected as PVP.

In a more preferred embodiment, an acid-base polymer blend membrane according to the present disclosure comprises an acidic polymer (A) selected as sPPSU, and a weak basic polymer (B2) selected as PVP, and a neutral polymer (N) selected as PVDF.

In another preferred embodiment, an acid-base polymer blend membrane according to the present disclosure comprises the acidic polymer (A) selected as SFS, and a basic polymer (B1) selected from mPBI and F6PBI.

In another preferred embodiment, an acid-base polymer blend membrane according to the present disclosure comprises the acidic polymer (A) selected as SFS, and a weak basic polymer (B2) selected from py-PSU and PVP.

*Polymer blend solution*

The polymer blend membrane of the present disclosure is preferably supported on a support structure. For application of the polymer blend membrane to a support structure, the polymers may be dissolved in a solvent.

Suitable solvents for the preparation of a polymer blend solution are aprotic / polar solvents, in particular N,N-dimethylacetamide (DMAc), dimethyl sulfoxide (DMSO), or N-methyl-2-pyrrolidone (NMP). Another suitable solvent is dimethylformamide (DMF).

The respective polymers may be dissolved in the solvents at a corresponding concentration. The concentration of the polymer in the solution may be in the range of from 1 to 30 wt.-%, preferably 3 to 20 wt.-%, further preferably 5 to 10 wt.-%. The concentration of the polymer in the solution may vary from different polymer to polymer depending on their solubility.

The polymers may be dissolved in the solvent by stirring the solvent and the polymer for several hours, such as for 2 to 20 hours. Additionally, the polymer may be dissolved in the solvent at elevated temperatures, such as at 50 to 200 °C. After preparation of the solution, it may additionally be filtered to remove excess polymer which was not dissolved.

It is preferred to prepare two separate solutions for the acidic polymer and the basic polymer, respectively. These two separate solutions may then be combined to form a single solution for application to the substrate. Optionally, the acidic solution may be deprotonated, e.g. using triethyl amine (TEA), diethyl amine (DEA) or n-propyl amine.

It is understood that the solvent may not fully dissolve the polymers, resulting in a solution, which may also be termed as stable suspension. For ease, the solution or stable suspension of the polymer is termed solution herein.

Separation filter preparation

The separation filter is composed of a support structure laminated with the acid-base polymer blend membrane as disclosed herein.

*Support structure*

According to a preferred embodiment, the support structure is a woven or nonwoven fabric. Both are commonly referred to as fabric in the following.

In one embodiment, the woven fabric may be a 2D woven fabric, such as a square mesh fabric, or a 3D woven fabric, such as a braid fabric.

In an alternative embodiment, the support structure is a nonwoven fabric (fleece). For economic reasons, the use of a nonwoven fabric is preferred.

As just outlined, the support structure is preferably a woven or nonwoven fabric, with a nonwoven fabric being further preferred. In a further preferred embodiment, the woven or nonwoven fabric comprises a polymer selected from the group consisting of polyethylene (PE), polypropylene (PP), polyamide (PA), polysulfone (PSU), poly(ether ether ketone) (PEEK), poly(ether ketone) (PEK), polyvinylidene fluoride (PVDF), polyethersulfone (PES), polyetherimide (PEI), polybenzimidazole (PBI), polyethylene terephthalate (PET), polyester and polyphenylene oxide (PPO).

According to a still further preferred embodiment, the woven or nonwoven fabric, preferably the nonwoven fabric, comprises a polymer selected from the group consisting of polyethylene (PE), polypropylene (PP), polyamide (PA), polysulfone (PSU), poly(ether ether ketone) (PEEK), poly(ether ketone) (PEK), polyethylene terephthalate (PET), and polyester.

According to another preferred embodiment, the woven or nonwoven fabric, preferably the nonwoven fabric, comprises a polymer selected from the group consisting of polyethylene (PE), polypropylene (PP), and polyester.

According to another embodiment, the woven or nonwoven fabric, preferably the nonwoven fabric, comprises

glass fibers, and preferably is composed of glass fibers.

In general, the support structure, preferably the nonwoven fabric, may have a thickness in the range of from 1 to 250 μm , preferably of from 1 to 200 μm , or from 2 to 200 μm , or from 5 to 100 μm , or from 10 to 200 μm , or from 50 to 100 μm , or from 5 to 50 μm , or from 20 to 50 μm , or preferably in the range of from 1 to 60 μm , or from 10 to 50 μm , or from 1 to 25 μm , or from 2 to 20 μm. If the thickness of the support structure is too low, it becomes more difficult to coat the support structure. On the other hand, if the support structure is too thick, it becomes uneconomic. Also a thick support structure is more difficult to entirely coat throughout the thickness of the support structure.

The nonwoven fabric for use in the support substrate of the separation filter according to the present disclosure may be prepared by melt-blowing processes or prepared by wet-laid technologies, optionally including a calibration using known calendar processes. The nonwoven fabric may optionally have a gradient structure, or it may be homogeneous.

For use in accordance with the present disclosure, the fabric may have a thickness in the range of from 1 to 250 μm, preferably of from 1 to 200 μm, or from 2 to 200 μm, or from 5 to 100 μm, or from 10 to 200 μm, or from 50 to 100 μm, or from 5 to 50 μm, or from 20 to 50 μm, or preferably in the range of from 1 to 60 μm, or from 10 to 50 μm, or from 1 to 25 μm, or from 2 to 20 μm. The mean fiber diameter may be in the range of from 1 to 50 μm, preferably from 1 to 25 μm, or from 2 to 20 μm.

*Lamination of support structure*

An exemplary process for the preparation of a nonwoven fabric laminated with an acid-base polymer blend membrane according to the present disclosure is described below. It is understood that a similar or identical process may also be applied to and used for a woven fabric.

A nonwoven fabric as substrate is provided as rolled good. For coupling activation, the nonwoven fabric is treated with a plasma in a plasma treating apparatus. The polymer blend solution is provided in a batch reactor under constant stirring to avoid precipitation and maintain a constant concentration of the polymer blend solution. With a pump, the solution is provided to a slot die or doctor blade assembly where the polymer blend solution is applied to the nonwoven fabric. In an alternative method, the support structure may be fully laminated with the polymer solution, e.g., in a bath of polymer solution. The nonwoven fabric may then optionally be passed through a calibrating unit where the membrane polymer is calibrated and a defined thickness of the acid-base polymer blend membrane may be adjusted. In an optional step, a pair of structure embossing rollers may further calibrate the membrane. In a drying unit, energy is applied to the laminated nonwoven fabric, e.g., via hot air or infrared radiation, such as a floating dryer, for evaporation of solvent, which may be recovered and recycled. By evaporation of the solvent, the solid polymer blend membrane is formed, and the acid and basic polymer components are linked to each other. The laminated and dried nonwoven fabric is then processed by conveyor rollers and rolled to result in the final separation filter as rolled good for storage and further use.

According to one embodiment, the separation filter can be a partially laminated with the acid-base polymer blend solution, resulting in a polymer blend membrane being present as a functional polymer film on one side of the fabric support structure.

According to another embodiment, the acid-base polymer blend membrane can be a fully laminated with the acid-base polymer blend solution, resulting in a polymer blend membrane being present as a functional polymer film on both sides of and throughout the fabric support structure. Both sides of the support structure are thus fully covered in a closed manner with an acid-base polymer blend membrane in the form of a film. In particular, if the absorptive capacity or the absorption kinetic of the fabric is low, coating on both sides and throughout the fabric may be advantageous.

In general, the thickness of the polymer blend membrane ("polymer membrane") within and on top of the support structure, i.e. the woven or nonwoven fabric, preferably the nonwoven fabric, may be in the range of from 10 to 100 μm , preferably from 10 to 50 μm , or from 15 to 30 μm , or from 17 to 25 μm. The thickness of the separation filter ("reinforced polymeric membrane") for use in in a humidifier, a moisture separation device, an enthalpy exchange device, a device with a condenser, preferably a humidifier for a fuel cell, a heat exchanger or an air conditioner, is usually preferably in the range of from 10 to 100 μm. It is preferred that the polymer blend membrane extends mainly into the support structure, but forming a smooth and closed surface on one or both sides of the support structure. Said smooth and closed surface may extend above and / or below the surface of the support structure, essentially sealing the support surface with the polymer blend membrane.

The separation filter of the present disclosure, i.e., the laminated fabric, may be further processed into suitable arrangements for use in a humidifier, a moisture separation device, an enthalpy exchange device, a device with a condenser, preferably a humidifier for a fuel cell, a heat exchanger or an air conditioner. Such processing may include the fixation of a separation filter in a frame, such as a frame made of a polymeric material. The fixation may be achieved by welding or gluing, using appropriate adhesives. However, it is preferred to weld the separation filter to frames, which may then also be arranged to stacks. When the separation filter is welded, e.g., to a frame, the fabric support structure may be used for welding and/or simple compression with flat sheet sealings.

Fig. 1 shows a schematic drawing of a humidifier 100 for a fuel cell 200 according to an embodiment of the

present disclosure. The humidifier 100 shown in Fig. 1 comprises a housing 102 which houses one or more separation filters 104. Each separation filter 104 may be fixed to frame(s) as described above. The processed filter(s) 104 may then be stacked into the housing 102. For simplicity, Fig. 1 shows a single stack. An exhaust gas stream 106, which is laden with water vapor, exits the fuel cell 200. A gas stream 108 to be fed into the fuel cell 200, which has low humidity, is enriched with water vapor that is selectively transported through the filter 104 from stream 106. The humidified gas stream exits the humidifier 100 as a humidified intake gas stream 110 and is fed into the fuel cell 200. The exhaust gas stream 106 flowing across a surface of filter 104, e.g. a bottom surface of filter 104, may flow in countercurrent to the dry gas stream 108, which may flow across the other surface of filter 104, e.g. the top surface.

The separation filters of the present disclosure have the advantage of halogen-free or reduced, in particular fluorine-free or fluorine-reduced starting materials, leading to halogen-free or halogen-reduced materials, in particular fluorine-free or fluorine-reduced materials. The materials of the separation filter are resistant to harsh conditions, such as elevated temperature during operation of the fuel cells, where temperatures in the fuel cell of as much as, e.g., 60 °C or even 80 °C may be reached. Furthermore, they are mechanically resistant to allow applications at overpressure, wherein the gas pressure at the membrane of a fuel cell may be above 1 bar (0.1 MPa), preferably from about 1 bar (0.1 MPa) to about 3 bar (0.3 MPa), more preferably from about 1 bar (0.1 MPa) to about 2 bar (0.2 MPa).

The separation filter may also be produced in a cheap manner due to the use of a support structure, which is widely available at low cost. Furthermore, the use of a support structure allows for the preparation of acid-base polymer blend membranes having a very low thickness, such as 10 μm or below, showing a higher water vapor transmission, compared to thicker commercially available polymer membranes, which have a thickness of, e.g., 50 μm. With the ability to prepare thin membranes, this may also add to reduced costs and reduced environmental burden due to reduced amount of polymer material used for the membranes.

EXPERIMENTAL SECTION

In the following, the present invention is illustrated in more detail by way of examples. However, it is understood that the scope of protection is only determined by the attached claims, not being restricted to any of the following examples. The following examples are set forth to assist in understanding the invention and should not be construed as specifically limiting the invention described and claimed herein.

<u>Synthesis and characterization of acid-base polymer blend membranes</u>

*Materials and instruments*

Solvents N,N-dimethylacetamide (DMAc) and dimethyl sulfoxide (DMSO) were purchased from RIVA GmbH Batteries (Germany) and Carl Roth GmbH & Co. KG (Germany), respectively. Prior to its use, DMAc was dried according to a standard distillation method known in the art.

Poly(ether ether ketone) (PEEK) was purchased from Sigma-Aldrich (USA).

Sulfonated poly(arylene ether sulfone (sPPSU) was prepared according to a method previously reported in D. Xing, J. Kerres Journal of New Materials for Electrochemical Systems 2006, 9, 51-60.

Sulfonated poly(ether ether ketone) (sPEEK) was prepared according to a method previously reported in H.-H. Ulrich, G. Rafler Die Angewandte Makromolekulare Chemie 1998, 263, 71-78.

Co-polymerized Polybenzimidazole (PBI-OO) was purchased from Fumatech GmbH (Germany).

Meta-polybenzimidazole (m-PBI) was purchased from HOS-Technik Vertriebs- und Produktions-GmbH (Austria). Prior to the use of polymer m-PBI, it was dried *in vacuo* for 12 hours at 110 °C.

Partially fluorinated poly(benzimidazole) (F6-PBI) was purchased from YAN JIN Technology Co., Ltd (China).

Poly(vinylpyrrolidone) (PVP) was purchased from BASF SE (Germany).

Pyridylketon-modified Polysulfone (py-PSU) was prepared according to a method previously reported in Literature (Journal of Polymer Science: Part A: Polymer Chemistry, Vol. 39, 2874-2888 (2001)).

Perfluorosulfonic acid (PFSA) was purchased from The Chemours Company (USA).

For the GPC (gel permeation chromatography; Agilent Technologies 1200 Series GPC system, USA) measurements, a differential refractometer (Shodex RI71, Showa Denko America, Inc., USA), a viscometer (PSS ETA-2010, PSS GmbH, Germany), and a multi-angle light scattering photometer (PSS SLD 7000, PSS GmbH, Germany) were used as detectors. The stationary phase consisted of two columns of different pore sizes: PSS PFG, 5-7 μm , 300 Å, and PSS PFG 5-7 μm , 1000 Å (PSS GmbH, Germany).

*Membrane preparation*

Polymer solutions were prepared each separately for all polymers that are comprised in the acid-base polymer

blend membrane. For each of the polymers, 5 g polymer were added in a 100 ml bottle equipped with a stirring bar at 25 °C, then 45 g dimethyl sulfoxide (DMSO) were added to yield a 10 wt.% polymer solution. The resulting solutions were stirred at 300 rpm for up to the polymers fully dissolved. For F6-PBI a 5 wt.% polymer solution was prepared due to lower solubility. Therefore, 2.5 g were dissolved in 47.5 g dimethyl sulfoxide and stirred at 25 °C for a minimum of 12 h. Prior to use the polymer solution was filtrated or centrifuged, to achieve a clear solution.

In the next step, the polymers were blended to obtain a blend polymer solution with the polymers in the weight-percent that is later required in the membrane. The blend polymer solution was allowed to stir at 25 °C, 300 rpm for 30 min. To ensure that there are no dust or gel particles, the blend polymer solution was optionally centrifuged at 4000 rpm for 10 min prior to use.

The acid-base polymer blend membrane was then prepared from the blend polymer solution using a membrane casting machine Elcometer 4340 using a squeegee with an adjustable gap height from 0-2000 μm both (Elcometer Instruments GmbH, Germany). Prior to usage, the glass plate of the membrane casting machine was pre-treated as described in the following. The glass plate was cleaned with a sponge and demineralized water. The surface of the cleansed glass plate was passivated using isopropyl alcohol (purity > 98 %), then dried with a cloth.

The acid-base blend polymer solution prepared as described above was coated on the pre-treated glass plate (about 25 mL/DIN A4-sized area). The squeegee gap was set at a distance of 100-300 μm to the glass plate. At a processing temperature of 20 °C to 45 °C, the coating acid-base polymer solution was drawn out to a thin film using a squeegee at a speed of 20 mm/s to 60 mm/s. A spacer (with a height of about 1 to 2 cm) and then a further pre-treated glass plate was stacked on top of the coated glass plate. The resulting pile was dried at 80 °C for 12 hours. In case, the membrane was still not dry, the membrane was further dried at 130 °C for 2 hours. After bathing the coated and dried glass plate in demineralized water for 5 to 10 minutes, the membrane was separated from the glass plate.

*Membrane characterization*

In one aspect of the invention, the membranes are used for selective transport of water molecules from a gaseous mixture.

In a more preferred embodiment, this selective transport of water molecules from a gaseous mixture may occur in a humidifier connected to a flow cell. The requirements for this specific application are that the membrane must be dense for gases, in particular to oxygen. Therefore, the bubble-point was determined as described below. In the present experimental setup, pressurized air was used to reflect the gas at the cathode side of a fuel cell. Commonly, fuel cells operate under 1.5 bar (0.15 MPa) air pressure.

Membrane sample was cut as a disc with 15 mm diameter. The membrane disc is then sandwiched between two metal sieves that can be inserted into a metal ring to connect the membrane to a pressure regulator from a gas supply and thereby forming a self-built bubble-cell. After putting the bubble-cell in a water beaker the pressure regulator-valve is opened and the pressure of the compressed air adjusted stepwise first starting at 1 bar (0.1 MPa), 2 bar (0.2 MPa), 2.5 bar (0.25 MPa) and then going up to 3 bar (0.3 MPa) until air bubbles evolve through the membrane. The bubble point is the pressure under which air bubbles start to evolve or alternatively the maximum pressure that was applied in the experimental setup, herein 3 bar (0.3 MPa), and which pressure could be kept without observing bubbles.

In one embodiment, the membrane needs to be highly permeable for water molecules, so as another experiment, the water vapor transmission was determined at 60 °C and 80 °C. These used temperatures might reflect commonly temperatures that are expected in a humidifier connected to a fuel cell.

Therein, the membrane sample was cut as a 42 mm disc and equipped to 100 ml bottle filled with 50 ml deionized water. The bottle was sealed with the membrane at the edges with a 42 mm O-ring sealing and closed the bottle with a cap with a 30 mm diameter hole to generate a constant evaporating area. Said prepared bottles were kept in an oven at 60 °C or 80 °C. From the mass loss of water after a certain time the WVT was calculated with this formula:

$$WVT = \frac{\Delta m}{t \times A}$$

Whereas $\Delta m$ = mass loss [g],

t = time [s]

A = specific area [0.00070686 $m^2$]

The thickness was measured with a thickness gauge.

Results

For inventive examples, acid-base blend polymer membranes IE1-IE6 were prepared as described above with the polymers and mass weight ratios according to Table 2 and Table 3. As comparative examples, membranes CE1-CE3 were prepared as described above using the polymers according to Table 2 and Table 3.

The thickness of the membranes, bubble point and water vapor transmission (WVT) were determined as described above. The results are summarized in Table 2 and Table 3. The criteria for selecting a suitable membrane(s) are bubble-point tightness till 3 bar and WVT of above 0.06 g/(s*$m^2$) at 60 °C or 0.3 g/(s*$m^2$) at 80 °C.

Table 2: Acid-base blend polymer membranes IE1-IE3 in comparison with membranes CE1-CE2.

| | Polymer A | Polymer B1 | Polymer B2 | Polymer A wt.-% | Polymer B1 wt.- | Polymer B2 wt.-% | thickness / μm | Bubble point / bar | WVT 80 °C / $g/m^2*s$ |
|---|---|---|---|---|---|---|---|---|---|
| **IE 1** | sPEEK | m-PBI | - | 90 | 10 | - | 26 | 3,00 | 0,39 |
| **IE 2** | sPPSU | F6-PBI | - | 90 | 10 | - | 46 | 3,00 | 0,32 |
| **IE 3** | sPEEK | - | PVP | 87 | - | 13 | 26 | 3,00 | 0,31 |
| **CE 1** | sPPSU | - | - | 100 | - | - | 47 | 2,00 | 0,10 |
| **CE** 2 | sPEEK | - | - | 100 | - | - | 52 | 2,50 | 0,10 |

Table 3: Acid-base blend polymer membranes IE4-IE6 in comparison with membrane CE3.

| | Polymer A | Polymer B1 | Polymer B2 | Polymer A wt.-% | Polymer B1 wt.-% | Polymer B2 wt.-% | thickness / μm | Bubble point / bar | WVT 60 °C / $g/m^2$*s |
|---|---|---|---|---|---|---|---|---|---|
| **IE 4** | sPPSU | F6-PBI | - | 90 | 10 | - | 46 | 3 | 0,12 |
| **IE 5** | sPEEK | - | PVP | 90 | - | 10 | 29 | 3 | 0,09 |
| **IE 6** | sPPSU | PBI-OO | py-PSU | 85 | 5 | 10 | 76 | 3 | 0,06 |
| **CE 3** | PFSA | - | - | 100 | - | - | 50 | 3 | 0,06 |

The experimental results in Table 2 show a comparison of an acid-base blend polymer membranes with membranes made from one polymer only. Therefore, the experimental results in Table 2 can be used to demonstrate the superior performance of the acid-base blend polymer membranes over simple membranes made from one polymer only. The experimental results in Table 2 show that acid-blend membranes according to the invention that are either fluorine-free or comprise a small amount of fluorine-reduced polymer, perform better in the bubble point test as well as exhibit superior water vapor transmission. In particular IE3, comprising a polymer B2 exhibiting weak basic groups according to the invention, has excellent properties with a bubble point of above 3 bar and a WVT of 0,31 g/(s*$m^2$) at 80 °C. IE1 and IE2, both comprising a Polymer B exhibiting strong basic groups, likewise show a high bubble point and WVT. The comparative examples both could not convince in the bubble test, as they were not tight above 2 bar for CE1 and 2.5 bar for CE2, respectively. Furthermore, both membranes showed poor WVT of 0,10 g/(s*$m^2$) at 80 °C. This result clearly shows that the acid-base blend polymer membrane concept indeed allows to obtain membranes with beneficial properties in selective gas transport from gaseous mixtures.
The experimental results in Table 3 show a comparison of an acid-base blend polymer membranes with a highly fluorinated membrane. Again the bubble point was determined and in addition, the WVT at 60 °C. While the PFSA-membrane of CE3 was tight for air up to 3 bar, the WVT was low with a value of 0,06 g/(s*$m^2$). In contrast, for IE4, the WVT was twice as high with a measured value of 0,12 g/(s*$m^2$). Also IE5 and IE6 performed equally good or better than CE3, but are fluorine-free, other than CE3. In summary, Table 3 thus shows that the acid-base blend polymer membranes which are fluorine-free or highly fluorine reduced and show superior properties to a highly fluorinated membrane.

**Claims**

1. An acid-base polymer blend membrane for selective transport of water molecules from a gaseous mixture comprising

   at least one first polymer (A) exhibiting acidic groups, and
   at least one second polymer, wherein the at least one second polymer is a polymer (B1) exhibiting basic groups or a polymer (B2) exhibiting weak basic groups, and
   wherein polymer (A) is comprised in an amount of from about 60 wt.-% to about 98 wt.-%, based on the total weight of the polymer blend membrane, and
   wherein the fluorine content of the acid-base polymer blend membrane is below 20 wt.-%.

2. The acid-base polymer blend membrane according to claim 1, comprising at least two second polymers, wherein the at least two second polymers comprise a polymer (B1) exhibiting basic groups, and a polymer (B2) exhibiting weak basic groups.

3. The acid-base polymer blend membrane according to claim 1 or 2, comprising at least one third polymer, wherein the at least one third polymer is a neutral polymer (N).

4. The acid-base polymer blend membrane according to claims 1 to 3, wherein the acidic group of the first polymer is selected from the group consisting of $-SO_3H$, $-PO_3H_2$, -COOH, $-ASO_3H_2$, $-SeO_3H$, $-C_6H_4OH$, -OH, and -SH, preferably wherein the acidic group is $-SO_3H$.

5. The acid-base polymer blend membrane according to any one of claims 1 to 4, wherein the at least one first polymer (A) is selected from the group consisting of sulfonated polyphenylsulfone (sPPSU), sulfonated poly(arylene ether sulfone) (sPAES), sulfonated poly(arylene ether ketone) (sPAEK), sulfonated poly(ether ether ketone) (sPEEK), sulfonated poly (ether ketone) (sPEK), and poly(4-styrenesulfonate) (PSS),

   preferably wherein the at least one first polymer (A) is selected from the group consisting of sulfonated polyphenylsulfone (sPPSU) and sulfonated poly(ether ether ketone) (sPEEK), and
   further preferably wherein the at least one first polymer is sulfonated polyphenylsulfone (sPPSU).

6. The acid-base polymer blend membrane according to any one of claims 1 to 5, wherein the polymer blend membrane comprises a polymer (B1), wherein the basic group is selected from the group consisting of aliphatic amines, heterocyclic amines, imines, and NH-substituted heteroaromatic amines, preferably wherein the basic group is selected from the group consisting of $C_1$-$C_6$-alkyl amines, piperidine, pyrrolidine, triazole, benzotriazole, pyrazole, benzpyrazole, imidazole, benzimidazole and partially fluorinated benzimidazole, further preferably wherein the basic group is selected from the group consisting of imidazole, benzimidazole and partially fluorinated benzimidazole, further preferably wherein the basic group is benzimidazole, and/or

wherein the polymer blend membrane comprises a polymer (B2), wherein the weak basic group is selected from the group consisting of aryl amines, lactams and $NR_2$-substituted heteroaromatic amines, preferably wherein the weak basic group is selected from the group consisting of pyrrolidone, pyrimidine, pyridine, and aniline, preferably wherein the weak basic group is pyrrolidone or pyridine.

**7.** The acid-base polymer blend membrane according to claims any one of claims 1 to 6, wherein the at least one second polymer comprises a polymer (B1), wherein polymer (B1) is selected from the group consisting of partially fluorinated poly(benzimidazole) (F6-PBI), meta-poly(benzimidazole) (m-PBI), polybenzimidazole-OO (PBI-OO), and co-polymerized polybenzimidazole (PBI-OO),

preferably wherein polymer (B1) is selected from the group consisting of partially fluorinated poly(benzimidazole) (F6-PBI), meta-poly(benzimidazole) (m-PBI), and co-polymerized polybenzimidazole (PBI-OO) and/or wherein the at least one second polymer comprises a polymer (B2), wherein polymer (B2) is selected from the group consisting of poly(vinylpyrrolidone) (PVP), pyridylketon-modified polysulfone (py-PSU) and poly(4-vinylpyridine) (PVPy), preferably polymer (B2) is selected from poly(vinylpyrrolidone) (PVP) and pyridylketon-modified polysulfone (py-PSU).

**8.** The acid-base polymer blend membrane according to any one of claims 3 to 7, wherein the membrane comprises a neutral polymer (N) selected from the group consisting of polyethylene, polyethers, polyesters, polysaccharide, polysaccharide esters, and partially fluorinated polyolefins,
preferably selected from the group consisting of poly(ethylene glycol) (PEG), poly(phenylene oxide) (PPO), cellulose, cellulose acetate (CMA), cellulose triacetate (CTA), carboxymethylcellulose (CMC), partially fluorinated polyarylene, and poly(vinylidenfluoride) (PVDF), more preferably wherein polymer (N) is partially fluorinated polyarylene or partially fluorinated poly(vinylidenfluoride) (PVDF), even more preferably wherein polymer (N) is partially fluorinated poly(vinylidenfluoride) (PVDF).

**9.** The acid-base polymer blend membrane according to any one of claims 1 to 8, wherein polymer (A) is comprised in the membrane in an amount of from about 80 wt.-% to about 95 wt.-%, more preferably in an amount of from about 85 wt.-% to about 90 wt.-%, based on the total weight of the polymer blend membrane.

**10.** Separation filter comprising a support structure and an acid-base polymer blend membrane according to any one of claims 1 to 9, wherein the acid-base polymer blend membrane is laminated with a support structure.

**11.** Separation filter according to claim 10, wherein the support structure is a woven or nonwoven fabric, preferably wherein the fabric comprises a polymer selected from the group consisting of polyethylene (PE), polypropylene (PP), polyamide (PA), polysulfone (PSU), poly(ether ether) ketone (PEEK), poly(ether ketone) (PEK), polyvinylidene fluoride (PVDF), polyethersulfone (PES), polyetherimide (PEI), polybenzimidazole (PBI), polyethylene terephthalate (PET), polyester and polyphenylene oxide (PPO); or wherein the fabric comprises glass fibers,

further preferably wherein the fabric comprises a polymer selected from the group consisting of polyethylene (PE), polypropylene (PP), polyamide (PA), polysulfone (PSU), poly(ether ether) ketone (PEEK), poly(ether ketone) (PEK), polyethylene terephthalate (PET), and polyester,
or wherein the fabric comprises a polymer selected from the group consisting of polyethylene (PE), polypropylene (PP), and polyester.

**12.** Separation filter according to any one of claims 10 or 11, wherein the support structure is laminated with the acid-base polymer blend membrane on one side of the support structure, or wherein the entire support structure is laminated with the acid-base polymer blend membrane.

**13.** Use of the acid-base polymer blend membrane according to any one of claims 1 to 9, or of the separation filter according to any one of claims 10 to 12 in a humidifier, a moisture separation device, an enthalpy exchange device, a device with a condenser, preferably a humidifier for a fuel cell, a heat exchanger or an air conditioner.

**14.** The use according to claim 13 in a humidifier for a fuel cell, wherein the operation temperature of the fuel cell is in the range of from about 50 °C to about 120 °C, preferably from about 60 °C to about 100 °C, most preferably from about 70 °C to about 90 °C, and/or

wherein the gas pressure applied at the one side of the acid-base polymer blend membrane is above 1 bar (0.1

MPa), preferably from about 1 bar (0.1 MPa) to about 3 bar (0.3 MPa), more preferably from about 1 bar (0.1 MPa) to about 2 bar (0.2 MPa) and/or
wherein the difference in gas pressure between the two sides of the acid-base polymer blend membrane is from about 0.1 bar (0.01 MPa) to about 1 bar (0.1 MPa), preferably is around 0.5 bar (0.05 MPa).

**15.** Device comprising the acid-base polymer blend membrane according to any one of claims 1 to 9, or a separation filter according to any one of claims 10 to 12, wherein the device is a humidifier, a moisture separation device, an enthalpy exchange device, or a device with a condenser, preferably a humidifier for a fuel cell, a heat exchanger or an air conditioner.

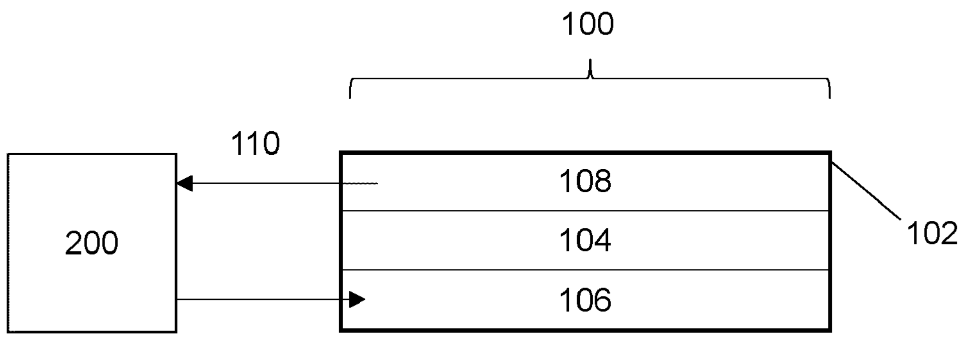


Fig. 1

Europäisches Patentamt
European Patent Office
Office européen des brevets

# EUROPEAN SEARCH REPORT

Application Number
EP 22 19 3580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 993 115 A1 (MANN HUMMEL LIFE SCIENCES & ENV HOLDING SINGAPORE PTE LTD [SG]) 4 May 2022 (2022-05-04)<br>* abstract *<br>* claims 1-10,12 *<br>* table 2 *<br>* paragraphs [0019], [0113] - [0118], [0124] - [0126] *<br>----- | 1-12<br>13-15 | INV.<br>B01D67/00<br>B01D71/44<br>B01D71/52<br>B01D71/68<br>B01D71/82 |
| X | EP 2 902 431 A1 (MAX PLANCK GES ZUR FÖRDERUNG DER WISSENSCHAFTEN E V [DE]) 5 August 2015 (2015-08-05)<br>* abstract *<br>* figures 1-4 *<br>* examples 1-3 *<br>----- | 1,4-7,9 | |
| | | | TECHNICAL FIELDS SEARCHED (IPC)<br>B01D |

The present search report has been drawn up for all claims

1

| Place of search | Date of completion of the search | Examiner |
|---|---|---|
| Munich | 23 January 2023 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 19 3580

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2023

| Patent document cited in search report | | Publication date | Patent family member(s) | | Publication date |
|---|---|---|---|---|---|
| EP 3993115 | A1 | 04-05-2022 | EP | 3993115 A1 | 04-05-2022 |
| | | | WO | 2022091011 A1 | 05-05-2022 |
| EP 2902431 | A1 | 05-08-2015 | EP | 2902431 A1 | 05-08-2015 |
| | | | EP | 3102624 A1 | 14-12-2016 |
| | | | WO | 2015117740 A1 | 13-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ITOH et al.** *SCIENCE,* 2022, vol. 376 (6594), 738-743
- **F. SCHÖNBERGER ; A. CHROMIK ; J. KERRES.** *Polymer,* 2010, vol. 51, 4299-4313
- *Journal of Polymer Science: Part A: Polymer Chemistry,* 2001, vol. 39, 2874-2888
- **D. XING ; J. KERRES.** *Journal of New Materials for Electrochemical Systems,* 2006, vol. 9, 51-60
- **H.-H. ULRICH ; G. RAFLER.** *Die Angewandte Makromolekulare Chemie,* 1998, vol. 263, 71-78